# EUROPÄISCHE PATENTSCHRIFT

(11) **EP 0 684 778 B1**
(45) Veröffentlichungstag und Bekanntmachung des Hinweises auf die Patenterteilung: **27.05.1998**
(21) Anmeldenummer: 94907555.0
(22) Anmeldetag: 11.02.1994
(51) Int. Cl.: A47J 41/02

(54) **THERMOSFLASCHE**
VACUUM BOTTLE
BOUTEILLE THERMOS

(30) Priorität: 12.02.1993 DE 9302025 U
(43) Veröffentlichungstag der Anmeldung: 06.12.1995
(73) Patentinhaber: EMSA-Werke Wulf GmbH & Co., 48282 Emsdetten (DE)
(72) Erfinder: WULF, Christian, D-48282 Emsdetten (DE)
(74) Vertreter: Grünecker, Kinkeldey, Stockmair & Schwanhäusser Anwaltssozietät
(86) Internationale Anmeldenummer: EP9400402
(87) Internationale Veröffentlichungsnummer: WO9417709

(56) Entgegenhaltungen:
- EP-A- 0 424 587
- DE-A- 1 816 448
- DE-B- 1 123 804
- DE-U- 7 729 773
- GB-A- 2 033 573
- GB-A- 2 267 144
- US-A- 3 089 603

## Beschreibung

Die Erfindung betrifft eine Thermosflasche mit den Merkmalen des Oberbegriffs des Anspruchs 1.

Bei einer aus der DE-OS 18 16 448 bekannten Thermosflasche dieser Gattung ist ein Dichtungsring zwischen einem Flaschenkolben und einem Öffnungsrand eingesetzt, um ein Hindurchtreten von Flüssigkeit zwischen dem Flaschenkolben und einem Flaschenabschnitt zu verhindern. Ein über einen Gewindeabschnitt lösbar an einem Flaschenabschnitt befestigbarer Deckel weist eine Dichtungsschräge auf, die an einem Hals des Flaschenkolbens anliegt, um eine Einfüllöffnung dicht zu verschließen. Leider wird diese Dichtung zerstört, wenn der Flaschenkolben zerbricht und nicht mehr dichtend an der Dichtungsschräge des Deckels anliegt, so daß Flüssigkeit zwischen Deckel und Flaschenabschnitt ausfließen kann.

Weiterhin offenbart die DE-OS 18 16 448 verschiedene Flaschenabschnitte, von denen einer eine Nut und der andere einen federartigen Vorsprung aufweist, die bei miteinander verbundenen Flaschenabschnitten ineinander greifen. Dabei sind Vorsprung und Nut nicht in dichtendem Eingriff miteinander, da bei einer Ausbildungsform die dichtende Verbindung durch eine sogenannte Drehschweißverbindung und bei der anderen Ausführungsform durch zusätzliche Anordnung einer Dichtungsmasse zwischen Vorsprung und Nut erzielt wird.

In der US-A-3089603 wird eine Dichtung vorgeschlagen, bei der zwischen dem Deckel und dem Flaschenabschnitt geneigte Ebenen vorgesehen sind, die bei eingeschraubtem Deckel dichtend aneinander liegen sollen. Eine weitere Abdichtung soll durch einen zylindrischen Teil des Deckels, der an eine entsprechende zylindrische Öffnung des Flaschenkolbens eingeführt ist, geschaffen werden. Diese zweite Dichtung schafft leider keine ausreichende Flüssigkeits- und Wärmedichtung für heiße Flüssigkeiten.

Die DE-AS 11 23 804 offenbart eine Isolierflasche mit einem direkt in eine Kolbenöffnung eines Einsatzkolbens einsetzbaren Verschlußstopfen. Die Isolierflasche ist aus einem Halsteil 11 und einem Unterteil 10 zusammengesetzt. Dabei erfolgt die Zusammensetzung dadurch, daß auf einen oberen Mündungsrand des Unterteils ein Öffnungsrand des Halsteiles aufgesetzt wird. Beabstandet vom Mündungsrand weist das Unterteil eine radial nach außen vorstehende Ringwulst mit zwei Schultern auf. Zwischen der dem Mündungsrand zugewandten Schulter verläuft das Unterteil auf Außen- und Innenseite geradlinig und vertikal. Der dem Unterteil zugekehrte Öffnungsrand ist doppelwandig ausgebildet und im Querschnitt an den Oberrand des Unterteils mit Ringwulst und Schultern angepaßt.

Ergänzungshalber ist noch die nachveröffentlichte GB-A-2267144 zu nennen, bei der eine Dichtung allein zwischen einer Dichtfläche des Deckels und dem Öffnungsrand eines Flaschenabschnittes vorgeschlagen ist.

Ausgehend von der DE-OS 18 16 448 liegt der Erfindung die Aufgabe zugrunde, eine gute Abdichtung der Thermosflasche, insbesondere bei einer Beschädigung des Flaschenkolbens zu gewährleisten.

Diese Aufgabe wird erfindungsgemäß dadurch gelöst, daß der Deckel einen Anlageflansch und einen Dichtungsabschnitt aufweist, wobei bei eingeschraubtem Deckel der Anlageflansch in dichtende Anlage mit dem Öffnungsrand und der Dichtungsabschnitt in Anlage mit dem Dichtungsring ist.

Dadurch bewirkt der eingeschraubte Deckel zusätzlich zu der bereits durch einfaches Einstecken der Nut in die Feder zwischen den Flaschenabschnitten bewirkten Dichtung eine weitere zweifache Abdichtung. Eine erste weiche Dichtung ist zwischen dem Dichtring und dem Dichtungsabschnitt des Deckels ausgebildet. Diese Dichtung gewährleistet einen ausreichenden Wärme- und Flüssigkeitsverlust. Eine zweite, in der Regel härtere Dichtung ist zwischen dem Anlageflansch des Deckels und dem Öffnungsrand ausgebildet. Diese Dichtung bildet einen flüssigkeitsdichtenden Verschluß, der auch bei gebrochenem Flaschenkolben verhindert, daß Flüssigkeit aus der Flasche austritt.

Bei Einschrauben des Deckels kann zunächst der Dichtungsabschnitt mit dem Dichtungsring in Anlage kommen und bei weiterem Einschrauben des Deckels kann die Dichtung zwischen Anlageflansch und Öffnungsrand geschlossen werden.

Vorteilhafte Weiterbildungen der Erfindung sind den abhängigen Ansprüchen 2-34 zu entnehmen

Im folgenden werden vorteilhafte Ausführungsbeispiele der Erfindung anhand der in der Zeichnung beigefügten Figuren näher erläutert und beschrieben.

Es zeigen:
- Fig.1: eine seitliche Schnittansicht einer erfindungsgemäßen Thermosflasche;
- Fig.2: einen Schnitt entlang der Linie II-II aus Figur 1;
- Fig.3: einen schnitt entlang der Linie III-III aus Figur 1;
- Fig.4: eine Schnittansicht eines unteren Flaschenabschnitts entlang der Linie IV-IV aus Figur 3;
- Fig.5: eine vergrößerte Darstellung eines Details X aus Figur 1;
- Fig.6: eine vergrößerte Darstellung eines Details Z aus Figur 4;
- Fig.7: eine vergrößerte Darstellung eines oberen Flaschenabschnitts; und
- Fig.8: den oberen Flaschenabschnitt aus Figur 7 mit aufgesetztem Deckel.

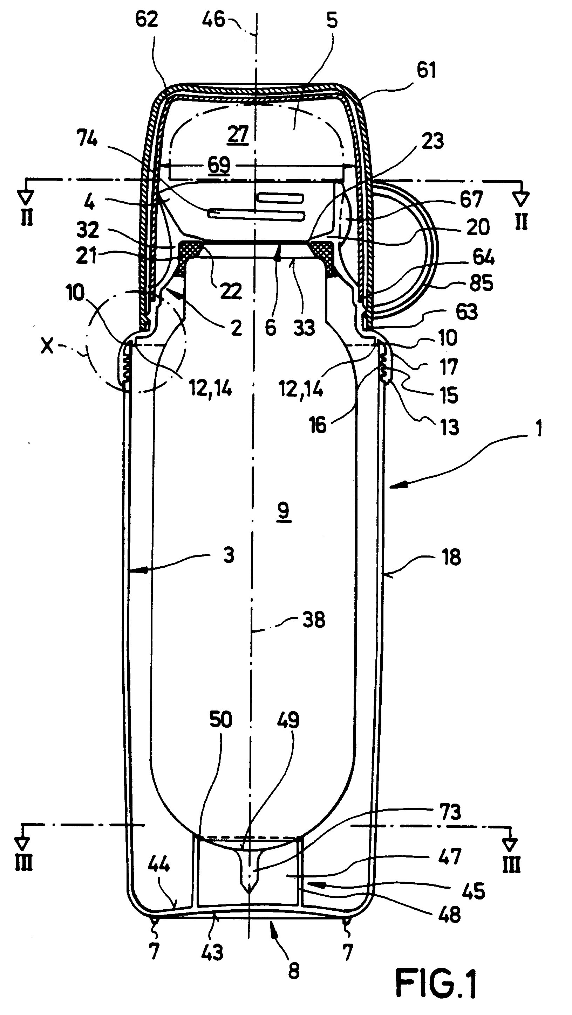

In Figur 1 ist eine erfindungsgemäße Thermosflasche 1 in einer seitlichen Schnittansicht dargestellt. Die Thermosflasche 1 weist einen oberen Flaschenabschnitt 2 und einen unteren Flaschenabschnitt 3 auf. Auf dem oberen Flaschenabschnitt 2 sind ein Innenbecher 62 und ein Trinkbecher 61 umgekehrt aufgesetzt, wobei sie einen im oberen Flaschenabschnitt 2 ausgebildeten Ausgießer 4, eine Einfüllöffnung 6 und einen diesen verschließenden Deckel 5 umgeben. Mit ihren Öffnungsrändern 63 beziehungsweise 64 sind der Trinkbecher 61 beziehungsweise der Innenbecher 62 auf im unteren Bereich des oberen Flaschenabschnitts 2 gebildeten umlaufenden Vorsprüngen abgesetzt. Nur ein unteres Ende einer Außenwand 17 des oberen Flaschenabschnitts 2 ragt aus dem Trinkbecher 61 hervor, wobei es ein Innengewinde 15 aufweist, das mit einem am unteren Flaschenabschnitt 3 ausgebildeten Außengewinde 16 in Eingriff steht.

Vom Deckel 5 ist ein Drehabschnitt 27 zwischen dem oberen Flaschenabschnitt 2 und den den Bechern 61 beziehungsweise 62 zugehörigen Böden sichtbar. Zur Vereinfachung sind weitere Abschnitte des Deckels 5 in Figur 1 nicht dargestellt. Unterhalb des Drehabschnitts 27 ist im oberen Flaschenabschnitt 2 ein Innengewinde 74 zum Einschrauben des Deckels 5 angeordnet. Gegenüberliegend zum Ausgießer 4 ist ein konvex gekrümmter Führungsflansch 67 auf der Außenseite des oberen Flaschenabschnitts 2 angeordnet. Von unten steht ein in der Thermosflasche 1 angeordneter Flaschenkolben 9 mit einer Einfüllöffnung 6 in Verbindung. Die Einfüllöffnung 6 ist von einem mit einer Dichtlippe 23 ausgebildeten Öffnungsrand 20 umgeben. Zwischen diesem und einem oberen Ende 33 des Flaschenkolbens 9 ist ein Dichtungsring 21 angeordnet. Dieser ist in einer im oberen Flaschenabschnitt 2 ausgebildeten Dichtungsaufnahme 32 angeordnet, die im Querschnitt im wesentlichen die Form eines auf dem Kopf stehenden L aufweist. Der Dichtungsring 21 weist eine unterhalb der Dichtungslippe 23 der Einfüllöffnung 6 angeordnete, teilweise in die Einfüllöffnung hineinragende Dichtlippe 22 auf.

Der Innenbecher 62 weist einen Innendurchmesser 69 auf, der im wesentlichen einem Außendurchmesser des oberen Flaschenabschnitts 2 im Bereich des Öffnungsrandes 64 des Innenbechers 62 entspricht. Auf diese Weise ist der Innenbecher auf den oberen Flaschenabschnitt 2 aufgesteckt. Der Trinkbecher 61 weist an seinem Öffnungsrand 63 ein Innengewinde auf, das mit einem entsprechenden am oberen Flaschenabschnitt 2 ausgebildeten Außengewinde in Eingriff steht. Weiterhin weist der Trinkbecher 61 zumindest einseitig einen im wesentlichen halbkreisförmig nach außen abstehenden Henkel 85 auf.

Der untere Flaschenabschnitt 3 ist im wesentlichen zu einer Mittelachse 46 der Thermoskanne 2 rotationssymmetrisch ausgebildet, wobei dessen Öffnungsrand 14 in Form einer Feder 12 in einer nach unten geöffneten, im oberen Flaschenabschnitt 2 ausgebildeten Umfangsnut 10 angeordnet ist. Diese erstreckt sich entlang des gesamten Umfangs des Öffnungsrandes 14. Ein Öffnungsrand 13 des oberen Flaschenabschnitts 2 liegt von außen auf einer Außenwand 18 des unteren Flaschenabschnitts 3 auf. Durch den Eingriff von Feder 12 in die ringförmige Aufnahmenut 10 ist eine allseitige Abdichtung der Thermosflasche 1 insbesondere bei einem Bruch im Flaschenkolben 9 gewährleistet.

Ähnlich wie der untere Flaschenabschnitt 3 sind auch der obere Flaschenabschnitt 2, der Deckel 5, der Innenbecher 62 und der Außenbecher 61 im wesentlichen rotationssymmetrisch zur Mittelachse 46 der Thermoskanne 1 ausgebildet. Ausgießer 4, Führungsflansch 67 und Henkel 85 sind jeweils nur einseitig angeordnet.

Am unteren Ende des unteren Flaschenabschnitts 3 ist ein Flaschenboden 8 ausgebildet. Dieser weist eine ringförmig umlaufende Stellfläche 7 und eine zwischen der Stellfläche konkav gekrümmte Unterseite 43 auf. Die ringförmige Stellfläche 7 ist konzentrisch zur Mittelachse 46 gegenüber der Außenwand des unteren Flaschenabschnitts 3 etwas nach innen versetzt angeordnet.

Auf der der Unterseite 43 gegenüberliegenden Oberseite 44 ist ein Lagerelement 45 angeordnet. Dieses ist durch eine einen Innenraum 47 umrandende Wandung 48 gebildet, wobei die Wandung 48 sich im wesentlichen parallel zur Mittelachse 46 erstreckt. Auf oberen Enden 50 der Wandung 48 ist der Flaschenkolben 9 mit einem im wesentlichen halbkreisförmig, konvex gekrümmten unteren Ende 49 aufgestellt. Der Flaschenkolben 9 ist rotationssymmetrisch zu seiner Längsachse 38 ausgebildet, wobei diese mit der Mittelachse 46 der Thermosflasche 1 zusammenfällt. In dem nach oben offenen Innenraum 47 des Lagerelements 45 ist ein verschlossener Evakuierstutzen 73 des Flaschenkolbens 9 angeordnet. Der Evakuierstutzen 73 steht im wesentlichen senkrecht vom unteren Ende 49 des Flaschenkolbens 9 und entlang der Längsachse 38 ab und endet mit Abstand zur Oberseite 44 des Flaschenbodens 8.

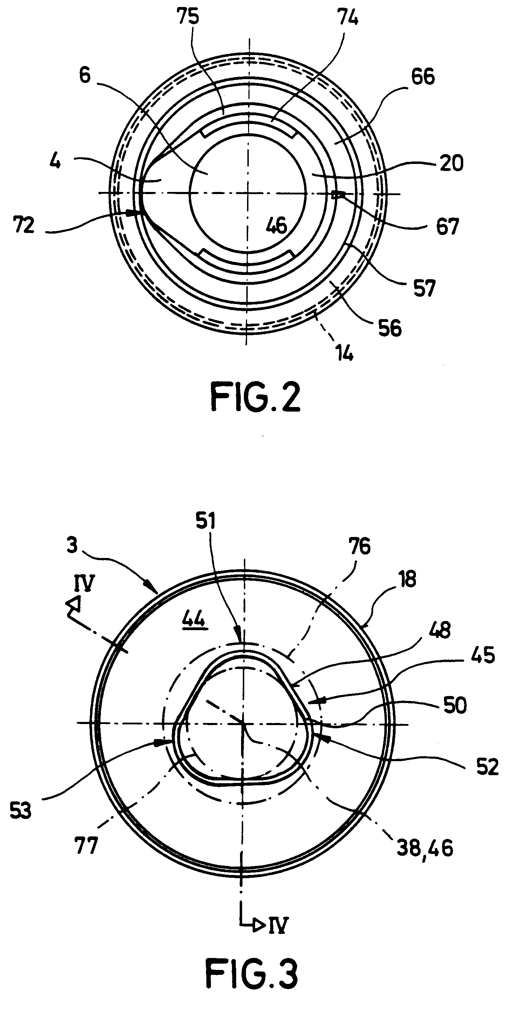

In Figur 2 ist ein Schnitt entlang der Linie II-II aus Figur 1 dargestellt. Die Darstellung entspricht einer Draufsicht auf die erfindungsgemäße Thermosflasche, wobei der in Figur 1 dargestellte Deckel 5 entfernt ist.

Die Einfüllöffnung 6 ist kreisrund mit der Mittelachse 46 als Mittelpunkt ausgebildet. Konzentrisch zur Einfüllöffnung 6 umgibt diese ein Öffnungsrand 20, der auf einer Seite in einen Ausgießer 4 übergeht. Vom Öffnungsrand 20 steht im wesentlichen vertikal eine Wand ab, von der in Figur 2 eine Oberkante 75 sichtbar ist. Diese ist im Bereich des Ausgießers 4 nach außen erweitert und endet in einer Ausflußlippe 72.

Gegenüberliegend zum Ausgießer 4 steht der Führungsflansch 67 radial ab. Dieser erstreckt sich in etwa bis zur Hälfte einer in Figur 2 ringförmig dargestellten Zentrierhülse 66. Die Ausflußlippe 72 erstreckt sich genau bis oberhalb eines maximalen Umfangs der Zentrierhülse 66. Konzentrisch zur Einfüllöffnung 6 ist anschließend an die Zentrierhülse 66 ein ringförmiger Stufenabsatz 57 angeordnet. Zu diesem wiederum ist ein weiterer Absatz 56 konzentrisch ausgebildet. Unterhalb des Absatzes 56 ist der Öffnungsrand 14 des in Figur 1 dargestellten unteren Flaschenabschnitts 3 angeordnet.

Weiterhin ist das Innengewinde 74 an der vertikal vom Öffnungsrand 20 nach oben abstehenden Wand angeordnet.

In Figur 3 ist ein Schnitt entlang der Linie III-III aus Figur 1 dargestellt. Dieser Schnitt entspricht einer Sicht in das Innere des unteren Flaschenabschnitts 3, wobei der Flaschenkolben 9 aus Figur 1 entfernt ist.

Auf der Oberseite 44 des Flaschenbodens ist das Lagerelement 45 angeordnet. Dieses weist im Hinblick auf die Mittelachse 38 des Flaschenkolbens beziehungsweise Längsachse 46 der Thermosflasche eine 3-zählige Symmetrie auf. Das heißt, bei jeweils Drehung um 120° um die Mittelachse 38 beziehungweise 46 erhält man die gleiche Anordnung des Lagerelements 45. Ecken 51, 52 und 53 des im wesentlichen ein gleichseitiges Dreieck bildenden Lagerelements 45 sind in gleichem Abstand zur Mittelachse 38, 46 angeordnet. Die Ecken sind abgerundet, wobei zwischen den abgerundeten Ecken 51, 52 und 53 jeweils geradlinig verlaufende Abschnitte der Wandung 48 angeordnet sind.

Ist auf dem oberen Ende 50 der Wandung 48 ein Flaschenkolben 9, siehe Figur 1, aufgesetzt und ist die Thermosflasche zusammengesetzt, so ist die elastisch ausgebildete Wandung radial nach außen drückbar, wobei sie im Extremfall einen Kreis bildet, der mittig zwischen einem Außenkreis 76 und einem Innenkreis 77 verläuft. Außenkreis 76 und Innenkreis 77 sind nur hilfsweise in Figur 3 eingezeichnet und dienen zur Darstellung der möglichen Aufweitung des Lagerelements 45.

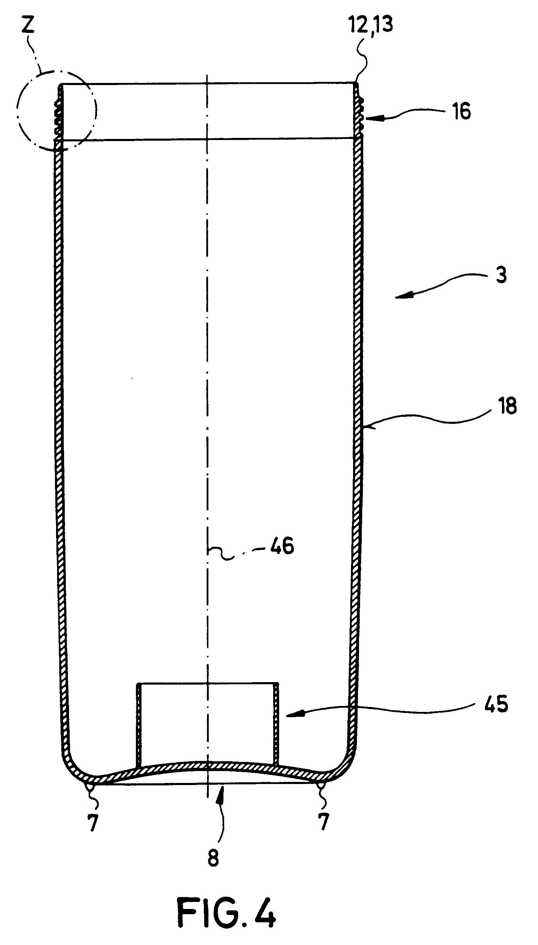

In Figur 4 ist ein Schnitt entlang der Linie IV-IV aus Figur 3 dargestellt. Durch diese Wahl des Schnittes ist das Lagerelement 45 symmetrisch zur Mittelachse 46 ausgebildet. Insbesondere ist in Figur 4 nur der untere Flaschenabschnitt 3 dargestellt, wobei aus den vorherigen Figuren bekannte Teile mit gleichen Bezugszeichen versehen sind.

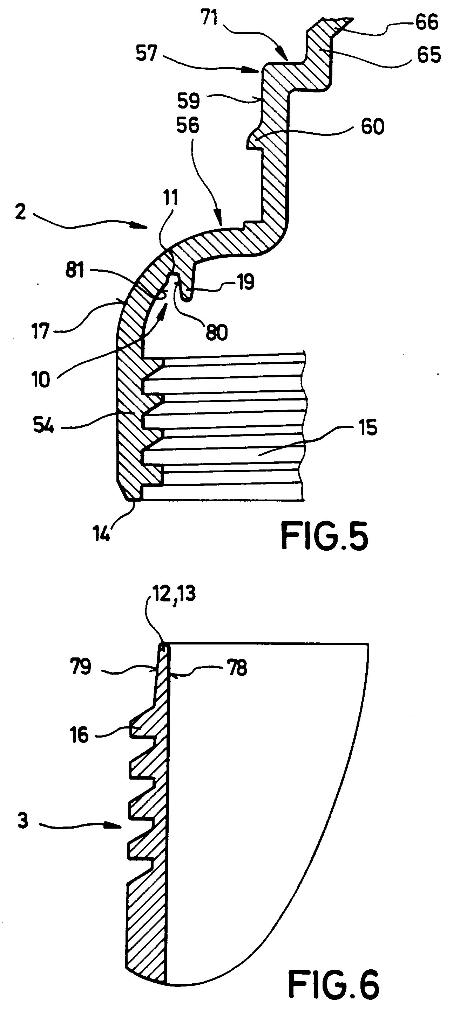

In Figur 5 ist ein Detail X aus Figur 1 vergrößert dargestellt.

Der obere Flaschenabschnitt 2 weist eine sich im wesentlich vertikal erstreckende Umfangsschürze 54 auf, auf deren Innenseite das Innengewinde 15 ausgebildet ist. Die Umfangsschürze 54 ist nach unten geöffnet und endet in dem Öffnungsrand 14. Im Bereich des Öffnungsrandes 14 verläuft die Außenwand 17 der Umfangsschürze 54 nach innen geneigt.

An ihrem oberen Ende geht die Umfangsschürze 54 über eine im wesentlichen viertelkreisförmige Krümmung in einen horizontal verlaufenden Absatz 56 über. An diesen schließt sich ein stufenförmiger Absatz 57 an, der eine vertikale Absatzseite 59 und eine horizontale Absatzseite 71 aufweist. Die vertikale Absatzseite 59 ist über eine im wesentlichen viertelkreisförmige Krümmung mit dem Absatz 56 verbunden. Auf ihrer Außenseite ist auf der vertikalen Absatzseite 59 ein Außengewinde 60 zum Verschrauben des in Figur 1 dargestellten Trinkbechers 61 ausgebildet. Die horizontale Absatzseite 71 dient zum Aufstellen des Öffnungsrandes 64 des in Figur 1 dargestellten Innenbechers 62 ähnlich wie der Absatz 56 zum Aufstellen des Öffnungsrandes 63 des Trinkbechers 61 dient. An die horizontale Absatzseite 71 schließt sich ein zur vertikalen Absatzseite 59 parallel verlaufender und gegenüber dieser Seite nach innen versetzter Anlagestreifen 65 an. Der Anlagestreifen 65 weist im wesentlichen eine einer Breite der horizontalen Absatzseite 71 entsprechende Höhe auf. Nach oben schließt sich an den Anlagestreifen 65 eine schräg nach innen geneigte Zentrierhülse 66 an.

Im Bereich der viertelkreisförmigen Verbindung zwischen Umfangsschürze 54 und Absatz 56 ist auf der Innenseite des oberen Flaschenabschnitts 2 die Aufnahmenut 10 ausgebildet. Diese weist einen im wesentlichen horizontal verlaufenden Nutgrund 11 und zwei sich zu einer Nutöffnung konisch erweiternde Nutflanken 80 und 81 auf. Die linke Nutflanke 81 ist von einer Innenseite der Außenwand 17 und die rechte Nutflanke 80 von einer Seite einer Nutwand 19 gebildet. Die Nutwand 19 verläuft im wesentlichen parallel zur nichtdargestellten Mittelachse des oberen Flaschenabschnitts 2. Die Nutflanken 80 und 81 bilden Führungsflächen für den Öffnungsrand 14 des unteren Flaschenabschnitts 3, siehe Figur 1.

In Figur 6 ist ein Detail Z aus Figur 4 vergrößert dargestellt. Die vergrößerte Darstellung zeigt insbesondere einen oberen Bereich des unteren Flaschenabschnitts 3. In diesem ist das Außengewinde 16 ausgebildet, das zum Verschrauben mit dem Innengewinde 15 aus Figur 5 dient. Der Öffnungsrand 13 des unteren Flachenabschnitts 3 wird von einer Innenseite 78 und einer Außenseite 79 oberhalb des Außengewindes 16 gebildet. Diese sind im wesentlichen durch eine Rundung an ihrem dem Außengewinde gegenüberliegenden Ende miteinander verbunden. Je nach Toleranz bei der Fertigung von oberem und unterem Flaschenabschnitt liegt die Außenseite 79 oder die Innenseite 78 an den in Figur 5 dargestellten Nutflanken 81 oder 80 an. Durch die konische Anordnung der Nutflanken ist der Öffnungsrand 13 beziehungsweise die Feder 12 beim Verschrauben von oberem und unterem Flaschenabschnitt in die Aufnahmenut 10 einführbar und ist bei vollständig miteinander verschraubten Flaschenabschnitten in Anlage am Nutgrund 11, siehe insbesondere Figur 5 und 6.

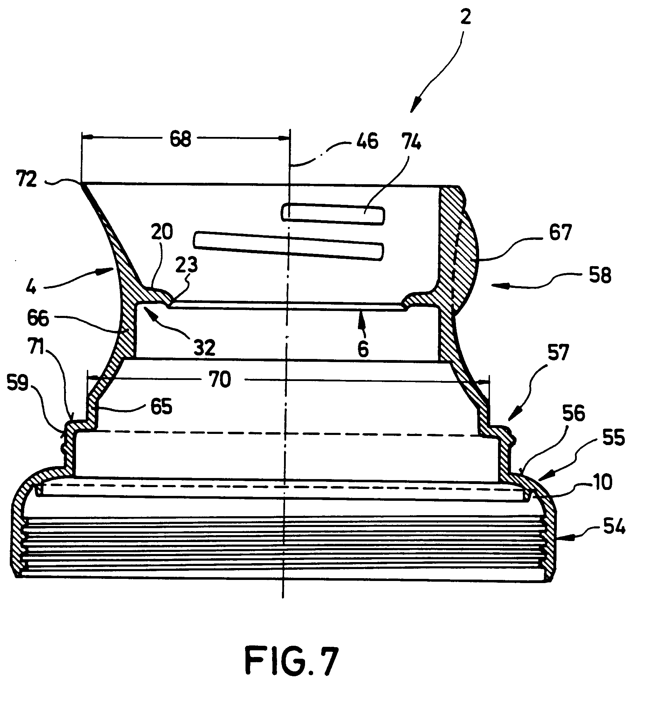

In Figur 7 ist der obere Flaschenabschnitt 2 vergrößert dargestellt. Der Flaschenabschnitt 2 ist von unten nach oben durch die Umfangsschurze 54, den Absatz 56, den stufenförmigen Absatz 57 und die Zentrierhülse 66 gebildet. Gleiche Bezugszeichen kennzeichnen gleiche Teile und werden nur noch teilweise erwähnt.

Die Zentrierhülse 66 ist auf ihrer Außenseite im wesentlichen konkav gekrümmt, wobei sie in ihrem unteren Bereich eine konisch zulaufende Führung im Inneren des oberen Flaschenabschnitts 2 bildet. Im wesentlichen im mittleren Bereich der Zentrierhülse 66 umgibt diese eine Dichtungsaufnahme 32 zur Anordnung des in Figur 1 dargestellten Dichtrings 21. Nach oben schließt sich an die Dichtungsaufnahme 32 die Einfüllöffnung 6 an, die von dem Öffnungsrand 20 umrandet ist. Dieser weist die zur Einfüllöffnung 6 ausgerichtete Dichtlippe 23 auf, die schräg nach unten zur Dichtungsaufnahme 32 verläuft. Im übrigen verläuft der Öffnungsrand 20 unter einem spitzen Winkel zu einer Horizontalen nach unten in Richtung zur Einfüllöffnung 6.

Auf der linken Seite in Figur 7 schließt sich an den Öffnungsrand 20 der Ausgießer 4 an, der in einer Ausflußlippe 72 endet. Diese ist in einem Abstand 68 zur Mittelachse 46 des oberen Flaschenabschnitts 2 angeordnet. Der Abstand 68 entspricht im wesentlichen der Hälfte eines Außendurchmessers 70 des Anlagestreifen 65 beziehungsweise der Hälfte des Innendurchmessers 69 des Innenbechers 62 aus Figur 1 im Bereich seines Öffnungsrandes 64.

Gegenüberliegend zum Ausgießer 4 ist an der Zentrierhülse 66 ein konvex gekrümmter, radial abstehender Führungsflansch 67 angeordnet.

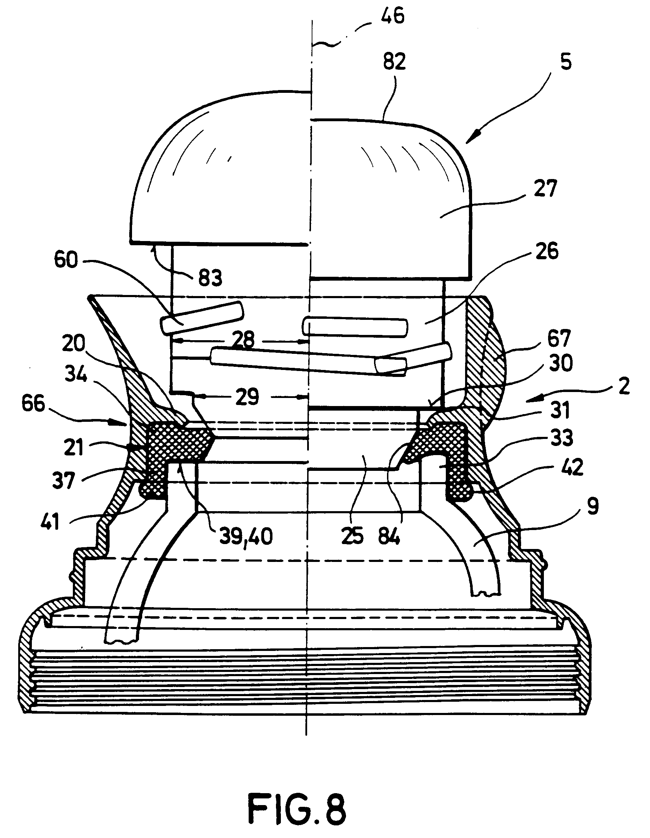

In Figur 8 ist der obere Flaschenabschnitt 2 aus Figur 7 insbesondere mit Deckel 5, Flaschenkolben 9 und Dichtring 21 dargestellt. Gleiche Teile sind wiederum durch gleiche Bezugszeichen versehen und werden nur noch teilweise erwähnt.

In der linken Hälfte der Figur 8 ist der Deckel 5 in einer Öffnungs- und Entnahmestellung und auf der rechten Seite in seiner Schließstellung dargestellt. Der Deckel 5 weist einen in die Einfüllöffnung einführbaren Dichtungsabschnitt 25, einen sich daran nach oben anschließenden Gewindeabschnitt 26 und einen den Deckel nach oben abschließenden Drehabschnitt 27 auf. Der Dichtungsabschitt 25 weist eine nach unten verlaufende und nach innen zur Mittelachse 46 geneigte Umfangsfläche 84 auf, mit der der Dichtungsring 21 in Schließstellung des Deckels 5 in Anlage ist. Benachbart zum Gewindeabschnitt 26 weist der Dichtungsabschnitt 25 einen kreiszylindrischen Anschlußbereich mit Radius 29 auf. Der Gewindeabschnitt 26 weist einen im Vergleich zum Radius 29 größeren Radius 28 auf, so daß am unteren Ende des Gewindeabschnitts 26 ein den Dichtungsabschnitt 25 umrandender Anlageflaschen 30 gebildet ist. Dieser verläuft auf seiner Unterseite radial nach außen und unten geneigt. Seine äußerste Umfangskante 31 liegt in Schließstellung des Deckels 5 auf dem Öffnungsrand 20 auf und bildet eine umlaufende Ringdichtung.

Der Drehabschnitt 27 weist auf seiner Unterseite eine radial am oberen Ende des Gewindeabschnitts 26 abstehende Anlagefläche 83 auf, die in Schließstellung des Deckels 5 auf der Oberkante 75 aus Figur 2 aufliegt. Seitlich ist der Drehabschnitt 27 in Richtung zu seiner Oberseite gekrümmt, wobei die Oberseite im wesentlichen abgeplattet ist. Auf dem Drehabschnitt 27 ist eine als Dekor ausgebildete Riffelung als Drehhilfe angeordnet.

Im Bereich des Gewindeabschnitts 26 ist eine Anzahl von Außengewindeabschnitten 60 ausgebildet, die mit dem Innengewinde 74 aus Figur 1 oder Figur 2 in Schließstellung in Eingriff sind.

Unterhalb des Öffnungsrands 20 ist in der in Figur 7 dargestellten Dichtungsaufnahme 32 der Dichtungsring 21 angeordnet. Dieser weist im Querschnitt im wesentlichen die Form eines auf dem Kopf stehenden L auf. Ein erster, horizontaler Dichtungsschenkel 34 des Dichtungsrings 21 liegt im wesentlichen auf dem oberen Ende 33 des Flaschenkolbens 9 auf. Ein freies Ende des ersten Dichtungsschenkel ist zu einer Dichtlippe 22, siehe Figur 1, ausgebildet, die in die Einfüllöffnung des oberen Flaschenabschnitts 2 hineinragt und in Schließstellung des Deckels 5 von der Umfangsfläche 85 des Dichtabschnitts 25 nach unten gedrückt ist. Weiterhin liegt in Schließstellung der zylindrische Anschlußbereich des Dichtabschnitts 25 im wesentlichen an der Dichtlippe 23 des Öffnungsrandes 20, siehe Figur 7, an.

Ein zweiter, vertikaler Dichtungsschenkel 37 umrandet das obere Ende 33 des Flaschenkolbens 9 von außen und liegt dicht am Flaschenkolben 9 und von innen an der Zentrierhülse 66 im Bereich der Dichtungsaufnahme 32, siehe Figur 7, an. Auf einer dem oberen Ende 33 des Flaschenkolbens 9 zuweisenden Unterseite 39 des ersten Dichtungsschenkels 34 ist eine Auflagemulde 40 gebildet, die im wesentlichen komplementär zur Endrundung des oberen Endes 33 des Flaschenkolbens 9 geformt ist. Am freien Ende 41 des zweiten Dichtungsschenkels 37 ist ein radial nach außen abstehender Dichtungsrand 42 angeordnet, der außerhalb der Dichtungsaufnahme 32 aus Figur 7 von unten an dieser anliegt.

Im folgenden sei kurz auf die Funktionsweise der erfindungsgemäßen Thermosflasche hingewiesen. Eine allseitige Abdichtung der Thermosflasche, beispielsweise bei einem Bruch im Flaschenkolben, wird insbesondere dadurch erzielt, daß eine Nut-Feder-Verbindung zusätzlich zu einer lösbaren Verbindung zwischen dem oberen Flaschenabschnitt und dem unteren Flaschenabschnitt vorgesehen ist. Durch die konische Ausbildung der Nut ist auch bei gewissen Toleranzen bei der Fertigung der Thermosflasche und unterschiedlicher Wärmeausdehnung der verschiedenen Flaschenabschnitte eine sichere Zuordnung von Nut und Feder gewährleistet, so daß die Abdichtung auch in diesen Fällen aufrechterhalten wird. Gleichzeitig wird durch die zusätzliche Ringdichtung zwischen Deckel und Öffnungsrand der Einfüllöffnung auch bei zerstörtem Flaschenkolben ein Auslaufen von Flüssigkeit im Bereich des Deckels verhindert. Folglich ist die erfindungsgemäße Thermoskanne nicht allein auf den zwischen Flaschenkolben und Öffnungsrand angeordneten Dichtungsring zur Abdichtung der Einfüllöffnung angewiesen. Weiterhin ist durch das Lagerelement auf dem Flaschenboden eine Zentrierung und elastische Lagerung des Flaschenkolbens gegeben. Aufgrund der Elastizität des Lagerelements kann auch eine größere Toleranzabweichung des Flaschenkolbens ausgeglichen werden und gleichzeitig ein ausreichender Druck auf den Dichtungsring ausgeübt werden. Weiterhin ergibt sich aufgrund der Elastizität des Lagerelements eine gewisse Stoßdämpferwirkung für den empfindlichen Flaschenkolben. Durch die spezielle Ausbildung im Umfangsbereich des oberen Flaschenabschnitts ist das Aufsetzen und die Befestigung von zwei Trinkgefäßen erleichtert.

## Patentansprüche

1. Thermosflasche (1), die aus Flaschenabschnitten (2, 3) zusammengesetzt ist und eine mit einem Deckel (5) verschließbare Einfüllöffnung (6) aufweist, wobei der Deckel (5) über einen Gewindeabschnitt (26) lösbar an einem Flaschenabschnitt (2) befestigbar ist und in den Flaschenabschnitten (2, 3) ein zur Einfüllöffnung offener Flaschenkolben aufgenommen ist und in einem Flaschenabschnitt (2) bei der Einfüllöffnung (6) ein Dichtungsring (21) unterhalb eines Öffnungsrandes (20) des Flaschenabschnittes (2) angeordnet ist, und wobei wenigstens ein Flaschenabschnitt (2, 3) eine umlaufende, in Richtung zum jeweils anderen Flaschenabschnitt (3, 2) offene mit einem im wesentlichen konisch zu einer Nutgrund (11) zulaufenden Querschnitt ausgebildete Aufnahmenut (10) aufweist, in welcher bei miteinander verbundenen Flaschenabschnitten (2, 3) eine am jeweils anderen Flaschenabschnitt ausgebildete Feder (12) abdichtend angeordnet ist,
**dadurch gekennzeichnet,**
daß der Deckel (5) einen Anlageflansch (30) und einen Dichtungsabschnitt (25) aufweist, wobei bei eingeschraubtem Deckel (5) der Anlageflansch (30) in dichtende Anlage mit dem Öffnungsrand (20) und der Dichtungsabschnitt in Anlage mit dem Dichtungsring (21) ist.

2. Thermosflasche nach Anspruch 1,
**dadurch gekennzeichnet,**
daß die Einfüllöffnung (6) von dem Öffnungsrand (20) gebildet ist.

3. Thermosflaschse nach Anspruch 1 oder 2,
**dadurch gekennzeichnet,**
daß der Dichtungsring (21) zwischen dem Öffnungsrand (20) und dem Flaschenkolben (9) angeordnet ist.

4. Thermosflasche nach wenigstens einem der vorangehenden Ansprüche,
**dadurch gekennzeichnet,**
daß der Dichtungsring (21) eine in die Einfüllöffnung(6) vorstehende Dichtlippe (22) aufweist, welche mit dem Deckel (5) in dessen Schließstellung in abdichtender Anlage ist.

5. Thermosflasche nach wenigstens einem der vorangehenden Ansprüche,
**dadurch gekennzeichnet,**
daß der Dichtungsabschnitt (25) nach unten verjüngt ausgebildet ist.

6. Thermosflasche nach wenigstens einem der vorangehenden Ansprüche,
**dadurch gekennzeichnet,**
daß der Öffnungsrand (20) und/oder der Anlageflansch (30) in Richtung zur Einfüllöffnung (6) geneigt verlaufen.

7. Thermosflasche nach wenigstens einem der vorangehenden Ansprüche,
**dadurch gekennzeichnet,**
daß der Anlageflansch (30) eine Umfangskante (31) aufweist, die in Schließstellung des Deckels (5) in Anlage mit dem Öffnungsrand (20) ist.

8. Thermosflasche nach wenigstens einem der vorangehenden Ansprüche,
**dadurch gekennzeichnet,**
daß der Gewindeabschnitt (26) anschließend an den Dichtungsabschnitt (25) ausgebildet ist.

9. Thermosflasche nach wenigstens einem der vorangehenden Ansprüche,
**dadurch gekennzeichnet,**
daß zwischen Dichtungs- und Gewindeabschnitt (25, 26) der Anlageflansch (30) vorgesehen ist.

10. Thermosflasche nach wenigstens einem der vorangehenden Ansprüche,
**dadurch gekennzeichnet,**
daß der Gewindeabschnitt (26) einen im Vergleich zum Dichtungsabschnitt (25) größeren Radius (28, 29) aufweist.

11. Thermosflasche nach wenigstens einem der vorangehenden Ansprüche,
**dadurch gekennzeichnet,**
daß der Deckel (5) oben einen abschließenden Drohabschnitt (27) aufweist.

12. Thermosflasche nach wenigstens einem der vorangehenden Ansprüche,
**dadurch gekennzeichnet,**
daß in dem Flaschenabschnitt (2) unterhalb des Öffnungsrandes eine zum Dichtungsring (21) im wesentlichen komplementär ausgebildete Dichtungsaufnahme (32) gebildet ist.

13. Thermosflasche nach wenigstens einem der vorangehenden Ansprüche,
**dadurch gekennzeichnet,**
daß der Dichtungsring (21) auf einem oberen Ende (33) des Flaschenkolbens (9) um eine entsprechende Öffnung (36) angeordnet ist, wobei ein im wesentlichen horizontal verlaufender erster Dichtungsschenkel (34) auf einem Rand (35) der Öffnung (36) aufliegt und ein im wesentlichen vertikal verlaufender zweiter Dichtungsschenkel (37) von außen am oberen Ende (33) des Flaschenkolbens (9) anliegt.

14. Thermosflasche nach wenigstens einem der vorangehenden Ansprüche,
**dadurch gekennzeichnet,**
daß die Dichtungslippe (21) radial nach innen vom ersten Dichtungsschenkel (34) absteht und in Richtung zu einer Längsachse (38) des Flaschenkolbens (9) spitz verläuft.

15. Thermosflasche nach wenigstens einem der vorangehenden Ansprüche,
**dadurch gekennzeichnet,**
daß auf einer Unterseite (39) des ersten Dichtungsschenkels (34) eine Auflagemulde (40) ausgebildet ist.

16. Thermosflasche nach wenigstens einem der vorhergehenden Ansprüche,
**dadurch gekennzeichnet,**
daß am unteren Ende (41) des zweiten Dichtungsschenkels (37) ein im wesentlich radial nach außen abstehender Dichtungsrand (42) ausgebildet ist.

17. Thermosflasche nach wenigstens einem der vorhergehenden Ansprüche,
**dadurch gekennzeichnet,**
daß die Thermosflasche (1) einen oberen, nach unten offenen und einen unteren, nach oben offenen Flaschenabschnitt (2, 3) aufweist.

18. Thermosflasche nach Anspruch 17,
**dadurch gekennzeichnet,**
daß der obere Flaschenabschnitt einen Ausgießer (4) aufweist.

19. Thermosflasche nach Anspruch 17 oder 18,
**dadurch gekennzeichnet,**
daß die Einfüllöffnung im oberen Flaschenabschnitt vorgesehen ist.

20. Thermosflasche nach wenigstens einem der vorangehenden Ansprüche,
**dadurch gekennzeichnet,**
daß die Feder (12) von einem Öffnungsrand (13, 14) eines Flaschenabschnitts (2, 3) gebildet ist.

21. Thermosflasche nach wenigstens einem der vorangehenden Ansprüche,
**dadurch gekennzeichnet,**
daß die Aufnahmenut (10) im oberen Flaschenabschnitt (2) ausgebildet ist.

22. Thermosflasche nach Anspruch 21,
**dadurch gekennzeichnet,**
daß der obere Flaschenabschnitt (2) ein Innengewinde (15) aufweist und die Aufnahmenut (10) im wesentlichen am oberen Ende des Innengewindes (15) angeordnet ist.

23. Thermosflasche nach wenigstens einem der Ansprüche 20 bis 23,
**dadurch gekennzeichnet,**
daß die Aufnahmenut (10) als konzentrisch zum Innen- und Außengewinde (15, 16) verlaufende Ringnut ausgebildet ist.

24. Thermosflasche nach wenigstens einem der vorangehenden Ansprüche,
**dadurch gekennzeichnet,**
daß die Ringnut (10) durch eine Außenwand (17, 18) eines Flaschenabschnittes (2, 3) und eine zur Außenwand beabstandete Nutwand (19) gebildet ist, wobei Nutwand (19) und Außenwand (17, 18) durch den Nutgrund (11) miteinander verbunden sind.

25. Thermosflasche nach wenigstens einem der vorhergehenden Ansprüche,
**dadurch gekennzeichnet,**
daß zur Verbindung der Flaschenabschnitte (2, 3) entsprechend ein Innengewinde (15) an einem und ein Außengewinde (16) am anderen Flaschenabschnitt (2, 3) ausgebildet ist.

26. Thermosflasche nach wenigstens einem der vorangehenden Ansprüche,
**dadurch gekennzeichnet,**
daß der obere Flaschenabschnitt (2) benachbart zur Einfüllöffnung (6) in Richtung zu dieser konisch zuläuft.

27. Thermosflasche nach wenigstens einem der vorangehenden Ansprüche,
**dadurch gekennzeichnet,**
daß der Flaschenkolben (9) im wesentlichen im unteren Flaschenabschnitt (3) angeordnet ist.

28. Thermosflasche nach wenigstens einem der vorangehenden Ansprüche,
**dadurch gekennzeichnet,**
daß auf einer Oberseite (44) des Flaschenbodens (8) innerhalb des unteren Flaschenabschnitts (3) ein den Flaschenkolben (9) im wesentlichen an dessen unterem Ende (49) abstützendes Lagerelement (45) angeordnet ist.

29. Thermosflasche nach Anspruch 28,
**dadurch gekennzeichnet,**
daß das Lagerelement (45) symmetrisch zu einer Mittelachse (46) der Thermosflasche (1) angeordnet und mit einer einen Innenraum (47) umrandeten Wandung (48) ausgebildet ist.

30. Thermosflasche nach Anspruch 28 oder 29,
**dadurch gekennzeichnet,**
daß das Lagerelement (45) eine n-zähliche Symmetrieachse aufweist, wobei n größer oder gleich 3 ist.

31. Thermosflasche nach Anspruch 29 oder 30,
**dadurch gekennzeichnet,**
daß der Flaschenkolben (9) ein kugelkalottenförmiges unteres Ende (9) aufweist, das teilweise in den Innenraum (47) hineinragt und welches zumindest stellenweise auf einem oberen Ende (50) der Wandung (48) aufliegt.

32. Thermosflasche nach wenigstens einem der Ansprüche 29 bis 30,
**dadurch gekennzeichnet,**
daß die Wandung (48) entlang ihres Umfangs abgerundete Ecken (51, 52, 53) aufweist.

33. Thermosflasche nach wenigstens einem der Ansprüche 29 bis 32,
**dadurch gekennzeichnet,**
daß die Wandung (48) elastisch ist.

34. Thermosflasche nach wenigstens einem der vorangehenden Ansprüche,
**dadurch gekennzeichnet,**
daß der obere Flaschenabschnitt (2) eine ein Innengewinde aufweisende Umfangsschürze (54) aufweist, deren oberes Ende (55) einen Absatz (56) bildet, an welchen sich ein weiterer, im wesentlicher stufenförmiger Absatz (57) anschließt, oberhalb dessen sich ein den Ausgießer (4) und die Einfüllöffnung (6) aufweisender Halsabschnitt (58) anschließt.

## Claims

1. Thermos flask (1) which is composed of flask sections (2, 3) and has a filling opening (6) closable with a cap (5), wherein the cap (5) can be fastened detachably on a flask section (2) via a threaded section (26) and a flask bulb open towards the filling opening is accommodated in the flask sections (2, 3) and in a flask section (2) near the filling opening (6) a sealing ring (21) is arranged below an opening edge (20) of the flask section (2), and wherein at least one flask section (2, 3) has a circumferential receiving groove (10) open in the direction towards the other flask section (3, 2) in question and constructed with a cross section tapering in essentially conical manner to a groove base (11) in which groove a tongue (12) constructed in the other flask section in question is arranged in sealing manner when the flask sections (2, 3) are connected to one another,
**characterised in that**
the cap (5) has a fitting flange (30) and a sealing section (25), wherein the fitting flange (30) is in sealing contact with the opening edge (20) and the sealing section is in contact with the sealing ring (21) when the cap (5) is screwed in.

2. Thermos flask according to Claim 1,
**characterised in that**
the filling opening (6) is formed by the opening edge (20).

3. Thermos flask according to Claim 1 or 2,
**characterised in that**
the sealing ring (21) is arranged between the opening edge (20) and the flask bulb (9).

4. Thermos flask according to at least one of the preceding claims,
**characterised in that**
the sealing ring (21) has a sealing lip (22) projecting into the filling opening (6) which lip is in sealing abutment with the cap (5) in the closed position of the latter.

5. Thermos flask according to at least one of the preceding claims,
**characterised in that**
the sealing section (25) is of downwardly tapering construction.

6. Thermos flask according to at least one of the preceding claims,
**characterised in that**
the opening edge (20) and/or the fitting flange (30) extend in inclined manner in the direction towards the filling opening (6).

7. Thermos flask according to at least one of the preceding claims,
**characterised in that**
the fitting flange (30) has a circumferential edge (31) which is contact with the opening edge (20) in the closed position of the cap (5).

8. Thermos flask according to at least one of the preceding claims,
**characterised in that**
the threaded section (26) is constructed adjacent to the sealing section (25).

9. Thermos flask according to at least one of the preceding claims,
**characterised in that**
the fitting flange (30) is provided between the sealing and threaded sections (25, 26).

10. Thermos flask according to at least one of the preceding claims,
**characterised in that**
the threaded section (26) has a greater radius (28, 29) by comparison with the sealing section (25).

11. Thermos flask according to at least one of the preceding claims,
**characterised in that**
the cap (5) has a final turning section (27) at the top.

12. Thermos flask according to at least one of the preceding claims,
**characterised in that**
a seal receptacle (32) constructed in essentially complementary manner to the sealing ring (21) is formed in the flask section (2) below the opening edge.

13. Thermos flask according to at least one of the preceding claims,
**characterised in that**
the sealing ring (21) is arranged about a corresponding opening (36) on an upper end (33) of the flask bulb (9), wherein a first sealing leg (34) extending in essentially horizontal manner rests on an edge (35) of the opening (36) and a second sealing leg (37) extending in essentially vertical manner fits from the outside against the upper end (33) of the flask bulb (9).

14. Thermos flask according to at least one of the preceding claims,
**characterised in that**
the sealing lip (21) projects radially inwards from the first sealing leg (34) and extends in tapering manner in the direction towards a longitudinal axis (38) of the flask bulb (9).

15. Thermos flask according to at least one of the preceding claims,
**characterised in that**
a contact cavity (40) is constructed on an underside (39) of the first sealing leg (34).

16. Thermos flask according to at least one of the preceding claims,
**characterised in that**
an essentially radially outwardly projecting sealing edge (42) is constructed at the lower end (41) of the second sealing leg (37).

17. Thermos flask according to at least one of the preceding claims,
**characterised in that**
the Thermos flask (1) has flask sections (2, 3), an upper one open towards the bottom and a lower one open towards the top.

18. Thermos flask according to Claim 17,
**characterised in that**
the upper flask section has a pourer (4).

19. Thermos flask according to Claim 17 or 18,
**characterised in that**
the filling opening is provided in the upper flask section.

20. Thermos flask according to at least one of the preceding claims,
**characterised in that**
the tongue (12) is formed by an opening edge (13, 14) of a flask section (2, 3).

21. Thermos flask according to at least one of the preceding claims,
**characterised in that**
the receiving groove (10) is constructed in the upper flask section (2).

22. Thermos flask according to Claim 21,
**characterised in that**
the upper flask section (2) has an internal thread (15) and the receiving groove (10) is arranged essentially at the upper end of the internal thread (15).

23. Thermos flask according to at least one of Claims 20 to 22,
**characterised in that**
the receiving groove (10) is constructed as an annular groove running concentrically with the internal and external threads (15, 16).

24. Thermos flask according to at least one of the preceding claims,
**characterised in that**
the annular groove (10) is formed by an outer wall (17, 18) of a flask section (2, 3) and a groove wall (19) at a distance from the outer wall, the groove wall (19) and outer wall (17, 18) being connected to one another by means of the groove base (11).

25. Thermos flask according to at least one of the preceding claims,
**characterised in that**
for the connection of the flask sections (2, 3) an internal thread (15) is correspondingly constructed on one flask section (2, 3) and an external thread (16) is constructed on the other flask section.

26. Thermos flask according to at least one of the preceding claims,
**characterised in that**
in the neighbourhood of the filling opening (6) the upper flask section (2) tapers conically in the direction towards the latter.

27. Thermos flask according to at least one of the preceding claims,
**characterised in that**
the flask bulb (9) is arranged substantially in the lower flask section (3).

28. Thermos flask according to at least one of the preceding claims,
**characterised in that**
a bearing element (45) supporting the flask bulb (9) essentially at its lower end (49) is arranged on an upper side (44) of the flask base (8) inside the lower flask section (3).

29. Thermos flask according to Claim 28,
**characterised in that**
the bearing element (45) is arranged symmetrically with respect to a central axis (46) of the Thermos flask (1) and is constructed with a wall (48) bordering an internal space (47).

30. Thermos flask according to Claim 28 or 29,
**characterised in that**
the bearing element (45) has a n-fold axis of symmetry, n being greater than or equal to 3.

31. Thermos flask according to Claim 29 or 30,
**characterised in that**
the flask bulb (9) has a lower end (9) in the shape of a spherical segment which projects in part into the internal space (47) and which rests at least at some points on an upper end (50) of the wall (48).

32. Thermos flask according to at least one of Claims 29 to 30,
**characterised in that**
the wall (48) has rounded corners (51, 52, 53) along its circumference.

33. Thermos flask according to at least one of Claims 29 to 32,
**characterised in that**
the wall (48) is elastic.

34. Thermos flask according to at least one of the preceding claims,
**characterised in that**
the upper flask section (2) has a circumferential skirt (54) possessing an internal thread the upper end (55) of which skirt forms a shoulder (56) adjoining which is a further essentially stepped shoulder (57) above which a neck section (58) possessing the pourer (4) and the filling opening (6) adjoins.

## Revendications

1. Bouteille Thermos (1), qui est composée de parties de bouteille (2, 3) et qui présente une ouverture de remplissage (6) pouvant être fermée par un couvercle (5), le couvercle (5) pouvant être fixé de façon amovible à une partie de bouteille (2) par l'intermédiaire d'une section filetée (26) et un flacon de bouteille ouvert vers l'ouverture de remplissage étant contenu dans les parties de bouteille (2, 3) et un anneau d'étanchéité (21) étant disposé dans une partie de bouteille (2) près de l'ouverture de remplissage (6) en dessous d'un bord d'ouverture (20) de la partie de bouteille (2), et pour laquelle au moins une partie de bouteille (2, 3) présente une rainure de captage (10) circulé ouverte à chaque fois dans la direction de l'autre partie de bouteille (3, 2) et formée avec une section essentiellement conique en allant vers un fond de rainure (11), rainure de captage dans laquelle est disposée, de façon à étanchéifier lorsque les parties de bouteille (2, 3) sont jointes ensemble, une languette (12) à chaque fois formée dans l'autre partie de bouteille,
caractérisée en ce que
le couvercle (5) présente une collerette de contact (30) et une section d'étanchéité (25), la collerette de contact (30) étant, lorsque le couvercle (5) est vissé, dans une disposition étanchéificatrice avec le bord de l'ouverture (20) et la section d'étanchéité étant en contact avec l'anneau d'étanchéité (21).

2. Bouteille Thermos selon la revendication 1,
caractérisée en ce que
l'ouverture de remplissage (6) est formée par le bord de l'ouverture (20).

3. Bouteille Thermos selon la revendication 1 ou 2,
caractérisée en ce que
l'anneau d'étanchéité (21) est disposé entre le bord de l'ouverture (20) et le flacon de la bouteille (9).

4. Bouteille Thermos selon au moins l'une des revendications précédentes,
caractérisée en ce que
l'anneau d'étanchéité (21) présente une lèvre d'étanchéité (22) faisant saillie dans l'ouverture de remplissage (6), ladite lèvre d'étanchéité étant dans une disposition étanchéificatrice avec le couvercle (5) lorsque celui-ci est en position fermée.

5. Bouteille Thermos selon au moins l'une des revendications précédentes,
caractérisée en ce que
la section d'étanchéité (25) est formée vers le bas de façon rétrécie.

6. Bouteille Thermos selon au moins l'une des revendications précédentes,
caractérisée en ce que
le bord de l'ouverture (20) et / ou la collerette de contact (30) s'étendent de façon inclinée en direction de l'ouverture de remplissage (6).

7. Bouteille Thermos selon au moins l'une des revendications précédentes,
caractérisée en ce que
la collerette de contact (30) présente une arête périphérique (31), qui en position fermée du couvercle (5) est en contact avec le bord de l'ouverture (20).

8. Bouteille Thermos selon au moins l'une des revendications précédentes,
caractérisée en ce que
la section filetée (26) est formée à la suite de la section d'étanchéité (25).

9. Bouteille Thermos selon au moins l'une des revendications précédentes,
caractérisée en ce que
la collerette de contact (30) est prévue entre la section d'étanchéité (25) et la section filetée (26).

10. Bouteille Thermos selon au moins l'une des revendications précédentes,
caractérisée en ce que
la section filetée (26) présente par comparaison avec la section d'étanchéité (25) un plus grand rayon (28, 29).

11. Bouteille Thermos selon au moins l'une des revendications précédentes
caractérisée en ce que
le couvercle (5) présente en haut une partie rotative (27) de fermeture.

12. Bouteille Thermos selon au moins l'une des revendications précédentes,
caractérisée en ce que
dans la partie de bouteille (2) est formé en dessous du bord de l'ouverture un logement d'étanchéité (32) formé essentiellement de façon complémentaire par rapport à l'anneau d'étanchéité (21).

13. Bouteille Thermos selon au moins l'une des revendications précédentes,
caractérisée en ce que
l'anneau d'étanchéité (21) est disposé à une extrémité supérieure (33) du flacon de la bouteille (9) autour d'une ouverture (36) correspondante, une première aile de joint (34) s'étendant pour l'essentiel horizontalement reposant sur un bord (35) de l'ouverture (36), et une deuxième aile de joint (37) s étendant pour l'essentiel verticalement s'appliquant de l'extérieur contre l'extrémité supérieure (33) du flacon de la bouteille (9).

14. Bouteille Thermos selon au moins l'une des revendications précédentes,
caractérisée en ce que
la lèvre d'étanchéité (21) fait salle vers l'intérieur radialement de l'aile de joint (34) et s'étend de façon pointue vers un axe longitudinal (38) du flacon de la bouteille (9).

15. Bouteille Thermos selon au moins l'une des revendications précédentes,
caractérisée en ce que
sur une face inférieure (39) de la première aile de joint (34) est formé une auge d'appui (40).

16. Bouteille Thermos selon au moins l'une des revendications précédentes,
caractérisée en ce que
au niveau de l'extrémité inférieure (41) de la deuxième aile de joint (37) est formé un bord de joint (42) faisant saillie pour l'essentiel radialement vers l'extérieur.

17. Bouteille Thermos selon au moins l'une des revendications précédentes,
caractérisée en ce que
la bouteille Thermos (1) présente une partie de bouteille (2) supérieure ouverte vers le bas et une partie de bouteille (3) inférieure ouverte vers le haut.

18. Bouteille Thermos selon la revendication 17,
caractérisée en ce que
la partie de bouteille supérieure présente un bec verseur (4).

19. Bouteille Thermos selon la revendication 17 ou 18,
caractérisée en ce que
l'ouverture de remplissage est prévue dans la partie de bouteille supérieure.

20. Bouteille Thermos selon au moins l'une des revendications précédentes,
caractérisée en ce que
la languette (12) est formée par un bord d'ouverture (13, 14) d'une partie de bouteille (2, 3).

21. Bouteille Thermos selon au moins l'une des revendications précédentes,
caractérisée en ce que
la rainure de captage (10) est formée dans la partie de bouteille (2) supérieure.

22. Bouteille Thermos selon la revendication 21,
caractérisée en ce que
la partie de bouteille (2) supérieure présente un filetage intérieur (15) et en ce que la rainure de captage (10) est pour l'essentiel disposée à l'extrémité supérieure du filetage intérieur (15).

23. Bouteille Thermos selon au moins l'une des revendications 20 à 22
caractérisée en ce que
la rainure de captage (10) est formée en tant que rainure circulaire s'étendant de façon concentrique par rapport au filetage intérieur et extérieur (15, 16).

24. Bouteille Thermos selon au moins l'une des revendications précédentes,
caractérisée en ce que
la rainure circulaire (10) est formée par une paroi extérieure (17, 18) d'une partie de bouteille (2, 3) et une paroi de rainure (19) décalée par rapport à la paroi extérieure, la paroi de rainure (19) et la paroi extérieure (17, 18) étant reliées ensemble par l'intermédiaire du fond de rainure (11).

25. Bouteille Thermos selon au moins l'une des revendications précédentes,
caractérisée en ce que
pour l'assemblage des parties de bouteille (2, 3), un filetage intérieur (15) est formé sur l'une des parties de bouteille (2, 3) et un filetage extérieur (16) est formé sur l'autre partie de façon appropriée.

26. Bouteille Thermos selon au moins l'une des revendications précédentes,
caractérisée en ce que
dans la région de l'ouverture de remplissage (6), la partie de bouteille (2) supérieure s'étend de façon conique en direction de celle ci.

27. Bouteille Thermos selon au moins l'une des revendications précédentes,
caractérisée en ce que
le flacon de la bouteille (9) est pour l'essentiel disposé dans la partie de bouteille (3) inférieure.

28. Bouteille Thermos selon au moins l'une des revendications précédentes,
caractérisée en ce que
sur une face supérieure (44) du fond de la bouteille (8), à l'intérieur de la partie de bouteille (3) inférieure, est disposé, pour l'essentiel au niveau de l'extrémité inférieure (49) du flacon de la bouteille (9), un élément d'appui (45) supportant ledit flacon.

29. Bouteille Thermos selon la revendication 28,
caractérisée en ce que
l'élément d'appui (45) est disposé symétriquement par rapport à un axe central (46) de la bouteille Thermos (1) et est formé avec une paroi (48) entourant une chambre intérieure (47).

30. Bouteille Thermos selon la revendication 28 ou 29,
caractérisée en ce que
l'élément d'appui (45) présente un axe de symétrie de degré n, n étant supérieur ou égal à 3.

31. Bouteille Thermos selon la revendication 29 ou 30,
caractérisée en ce que
le flacon de la bouteille (9) présente une extrémité inférieure (9) en forme de calotte sphérique, qui dépasse partiellement dans la chambre intérieure (47) et qui repose au moins à certains endroits sur une extrémité supérieure (50) de la paroi (48).

32. Bouteille Thermos selon au moins l'une des revendications 29 à 30,
caractérisée en ce que
la paroi (48) présente le long de son périmètre des coins arrondis (51, 52, 53).

33. Bouteille Thermos selon au moins l'une des revendications 29 à 32,
caractérisée en ce que
la paroi (48) est élastique.

34. Bouteille Thermos selon au moins l'une des revendications précédentes,
caractérisée en ce que
la partie de bouteille (2) supérieure présente un tablier périphérique (54) présentant un filetage intérieur, l'extrémité supérieure (55) dudit tablier formant un épaulement (56) auquel se joint un autre épaulement (57), pour l'essentiel en forme de gradin, au dessus duquel se raccorde une partie de col (58) présentant le bec verseur (4) et l'ouverture de remplissage (6).
